Europäisches Patentamt

European Patent Office

Office européen des brevets

(19)

(11) Publication number: **0 134 619**
**B1**

# EUROPEAN PATENT SPECIFICATION

(12)

(45) Date of publication of patent specification: **09.11.88**

(51) Int. Cl.⁴: **G 01 V 5/06, G 01 V 5/04**

(21) Application number: **84302035.5**

(22) Date of filing: **27.03.84**

(54) A borehole gamma ray logging detector and system.

(30) Priority: **22.06.83 US 506914**

(43) Date of publication of application:
**20.03.85 Bulletin 85/12**

(45) Publication of the grant of the patent:
**09.11.88 Bulletin 88/45**

(84) Designated Contracting States:
**DE FR GB NL**

(56) References cited:
**GB-A- 786 194**
**US-A-2 824 233**
**US-A-3 859 523**

**IEEE TRANSACTIONS ON NUCLEAR SCIENCE,
vol. NS-28, no. 1, February 1981, pages 290-
294, IEEE, New York, USA; D.C.**

**STROMSWOLD: "Comparison of sodium
iodide, cesium iodide, and bismuth germanate
scintillation detectors for borehole gamma-ray
logging"**

(73) Proprietor: **MOBIL OIL CORPORATION**
**150 East 42nd Street**
**New York New York 10017 (US)**

(72) Inventor: **Givens, Wyatt Wendell**
**10338 Carry Back Circle**
**Dallas Texas 75229 (US)**
Inventor: **Stromswold, David Charles**
**4015 Bobbin Lane**
**Addison Texas 75234 (US)**

(74) Representative: **Cooper, John Anthony et al**
**Mobil Court 3 Clements Inn**
**London WC2A 2EB (GB)**

Courier Press, Leamington Spa, England.

## Description

This invention relates to a gamma ray logging detector and system for measuring gamma radiation from formations surrounding a borehole.

Various methods and apparatus have been utilized in the well logging art to study the radioactive properties of subsurface formations, both where the radiation is natural and where it is artificially induced. Logs of such properties aid in the study of the nature of the subsurface formations, particularly in exploration for minerals and hydrocarbon deposits. Examples of known methods for measuring gamma radiation to identify subsurface formations are disclosed in U.S. Patent No. 3,940,610 and British Patent No. 786,194. Each of these patents discloses a borehole logging tube having a gamma ray detector of the scintillation type which cooperates with a photomultiplier tube for detecting natural gamma radiation. The scintillation detector is a crystal of sodium iodide activated with thallium. The sodium iodide gives off quanta of light energy called photons, the intensity of which is proportional to the energy of the gamma ray interaction in the sodium iodide crystal. The photomultiplier tube responds to these photons to produce a succession of pulses having magnitudes proportional to the energy of the gamma rays. These pulses are amplified and sent uphole to a surface recording system. British Patent No. 786194 also teaches cooling of the sodium iodide detector so that it is maintained at the proper temperature for operation in a reliable manner without causing drift.

It is also known from, for example, IEEE Transactions on Nuclear Science, Volume NS-28, No. 1, February 1981, pages 290—294 to use bismuth germanate scintillation detectors for borehole gamma ray logging since bismuth germanate offers enhanced gamma ray efficiency over that provided by sodium iodide. Bismuth germanate is, however, also disclosed as being more temperature sensitive than sodium iodide although the use of electronic gain stabilizers is suggested as being sufficient to overcome this problem.

According to the invention, there is provided a gamm ray detector for borehole logging comprising:

a) a vacuum insulating housing,

b) a bismuth germanate crystal which is located within said housing and which is sensitive to gamma rays and gives off light energy in the form of photons proportional to the energy of the detected gamma rays,

c) a heat absorbing material disposed within the housing for absorbing heat transferred into the interior of the housing through a change in phase of said heat absorbing material from solid to liquid, and

d) a heat conductive lining for holding said heat absorbing material in place as said heat absorbing material changes from the solid phase to the liquid phase.

In the detector and system according to the invention, the use of a bismuth germanate crystal achieves the advantage of providing a sensitivity to gamma rays significantly greater than sodium iodide. The detection efficiency and energy resolution of the crystal are maintained during logging operations by controlling or limiting changes in the lighth energy output of the crystal under increasing borehole temperatures with depth. Such control is preferably accomplished by providing an operating environment for the crystal in which an operating temperature below 38°C (100°F) is maintained during logging operations under borehole temperatures up to 204°C (400°F).

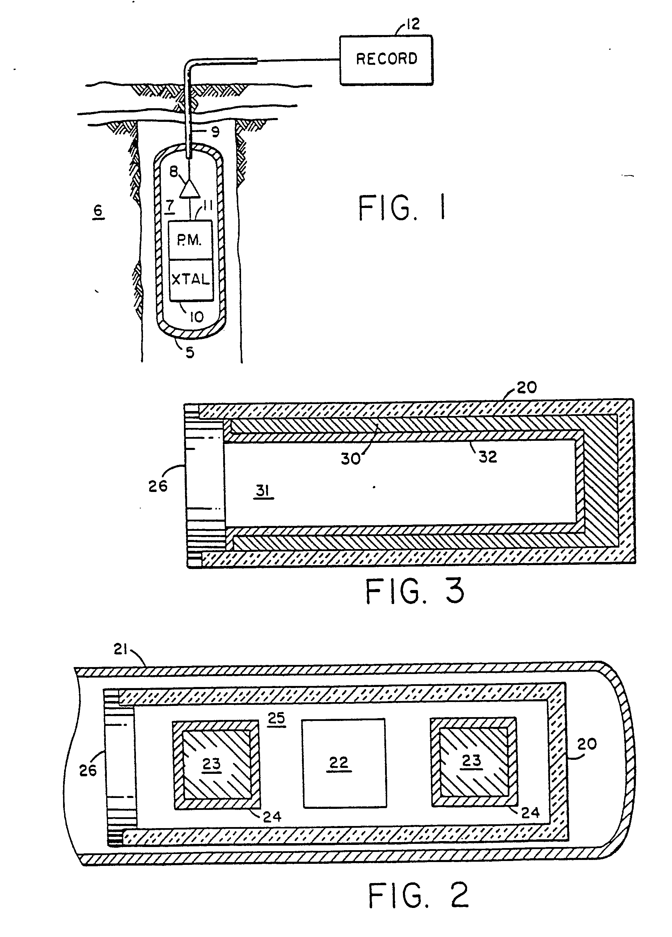

In the accompanying drawings, Fig. 1 illustrates a borehole logging system employing a gamma ray detector according to one example of the present invention, and Figs. 2 and 3 illustrate alternate embodiments for a housing for the gamma ray detector of Fig. 1 for limiting changes in the light energy output during logging operations under increasing borehole temperature with depth.

Referring to Fig. 1, a borehole logging tool 5 measures natural or induced gamma radiation emitted by a subsurface formation 6. The borehole tool 5 includes a gamma ray detector 7 and an amplifier 8. The gamma ray detector 7 includes a scintillation type detector 10 which cooperates with a photomultiplier tube 11 to detect gamma radiation. The detector 10 is a crystal of bismuth germanate which gives of quanta of light energy called photons, the intensity of which are proportional to the energy of the gamma ray interaction in the bismuth germanate crystal. The photomultiplier tube 11 responds to these photons to produce a succession of electrical pulses having magnitudes proportional to the energy of the gamma rays. These pulses are sent uphole by way of the amplifier 8 and a logging cable 9 to a recording system 12.

In one embodiment, the gamma ray detector 7 employs a bismuth germanate ($Bi_4 Ge_3 O_{12}$) crystal supplied by Harshaw Chemical Company integrally mounted to a Hamamatsu R-1306 photomultiplier tube. In said one embodiment, the crystal is 5 cm (two inches) in diameter and 5 cm (two inches) long and is housed in an aluminum housing. The crystal is preferably operated at a voltage of about +1000 volts. Such a bismuth germanate detector offers significant enhancement to the gamma ray measurements over a sodium iodide detector which has been the standard scintillation-type detector used for many years in borehole logging. More particularly, bismuth germanate provides a several-fold enhanced counting efficiency over sodium iodide in the detection of high energy gamma rays, and is much less susceptible to neutron activation when used in a borehole logging tool employing a neutron source for inducing gamma-ray emissions from the formations surrounding the borehole.

The increased counting efficiency of the bismuth germanate detector over the sodium iodide detector is of specific importance in the logging of gamma rays from naturally radioactive elements in subsurface formations. The count rates for natural spectral logging are low and the increase in counting efficiency offers much improved data quality. In one experiment both a bismuth germanate detector and a sodium iodide detector were used to count 1.78 MeV gamma rays from the activation of aluminum pellets in a sand and water mixture. The counts in the aluminum peak at 1.78 MeV were 3.7 times greater with the bismuth germanate detector. In another experiment both bismuth germanate and sodium iodide detectors were used to count 2.2 MeV gamma rays from the activation of hydrogen in water. The counts in the hydrogen peak at 2.2 MeV were 4.2 times greater with the bismuth germanate detector. In a still further experiment both bismuth germanate and sodium iodide detectors were used to count 4.4 MeV gamma rays from carbon in a graphite and water mixture. The counts in the carbon peak at 4.4 MeV were 6.2 times greater with the bismuth germanate detector. In each of the foregoing experiments both detectors employed cylindrical 5 cm by 5 cm (2″ by 2″) crystals.

When used in a logging tool employing a neutraon source for activating the subsurface formations, the bismuth germanate detector has a significantly lower neutron activation than the sodium iodide detector. This results in a lower background for the gamma ray count. Activation of the iodine in sodium iodide detectors has been a problem when operated in conjunction with a neutron source. In one experiment a 5 cm by 5 cm (2″ by 2″) sodium iodide detector was shielded by a 0.8 cm (5/16 inch) thick layer of lithium powder to reduce the number of thermal neutrons reaching the detector and producing activation. The activation counts from the sodium iodide detector were 320 percent above background whereas the counts from the bismuth germanate detector were 35 percent above background. Thus the sodium iodide detector provided about nine times the activation counts of the bismuth germanate detector. The experiment was repeated for a sodium iodide detector without the lithium powder shielding. In this instance the sodium iodide detector provided about forty seven times the activation counts of the bismuth germanate detector.

Referring now to Fig. 2 there is illustrated a preferred embodiment of a housing for the bismuth germanate crystal for limiting changes in the light energy output during logging operations under increasing borehole temperature with depth. A vacuum insulating flask 20 is located within the housing or pressure shell 21 of the logging tool. The instrumentation 22 to be protected against rises in temperature in the borehole is placed within the inner chamber 25 of vacuum flask 20 and the flask is closed by an insulating plug 26. The flask 20 reduces the flow of heat into the interior chamber 25, but any heat which does reach the interior of the flask is absorbed by a heat absorbing material 23 through a change of phase of the material from solid to liquid. The temperature within the flask is maintained near ambient until all the solid heat absorbing material melts. It will be appreciated that using the material 23 to control the temperature of the bismuth germanate detector has the advantage of being passive, that is, it requires no electrical power input.

Maintaining the operating environment of the bismuth germanent crystal below about 38°C (100°F) is important because its performance degrades significantly as temperature rises. Such sensitivity to operating temperature is much greater for bismuth germanate than for sodium iodide. A particularly suitable heat absorbing material is gallium, a metal that melts at 30°C (86°F), has a heat fusion (heat required for melting) of 19 calories per gram, and has a density of 5.9 grams/cm$^3$. These properties make it ideal as a compact heat absorber for operation near ambient temperature. The gallium, or other suitable heat absorbing material, is contained in a metallic container or containers 24, such as copper, to facilitate heat transfer into the gallium, and to hold the liquid when the solid gallium begins to melt. In one experiment a vacuum flask 1.22 m (four feet) long with an internal diameter of 6.1 cm (2.4 inches), housed one kilogram of gallium contained in copper cylinders. A temperature of up to 200°C (392°F) was applied to the outside of the flask. The internal temperature remained below 32°C (90°F) for five hours due to the melting of the gallium.

Materials other than pure gallium which are suitable for use as heat absorbers in borehole logging operations are alloys of gallium with indium and tin (which melt at 10°C (50°F) and 27°C (80°F) respectively) and ice (which melts at 0°C (32°F)). In an experiment using 380 grams of ice in the same vacuum flask used with gallium, the internal temperature of the flask remained below 4°C (40°F) for seven hours in the 200°C (392°F) environment.

An alternative embodiment for the temperature control unit of the tool is shown in Fig. 3, in which the heat absorbing material is shown at 30 as a liner along the wall of the insulating flask 20 and surrounding the inner chamber 31. Such liner 30 is held in position against the inner wall of the vacuum insulating flask by a metallic liner 32. In a further embodiment the insulating flask 20 and liner 30 may be replaced by a double walled housing with the heat absorbing material contained within the double walled housing. It will be appreciated that additional heat absorbing material may be placed in containers such as shown in Fig. 2 or placed in the inner chamber 31 of Fig. 3 to give added heat absorbing capability.

**Claims**

1. A gamma ray detector for borehole logging, comprising:
   (a) a vacuum insulating housing,

(b) a bismuth germanate crystal which is located within said housing and which is sensitive to gamma rays and gives off light energy in the form of photons proportional to the energy of the detected gamma rays,

(c) a heat absorbing material disposed within the housing for absorbing heat transferred into the interior of the housing through a change in phase of said heat absorbing material from solid to liquid, and

(d) a heat conductive lining for holding said heat absorbing material in places as said heat absorbing material changes from the solid phase to the liquid phase.

2. A gamma ray detector as claimed in claim 1 wherein said heat absorbing material is gallium or an alloy of gallium with tin or indium.

3. A borehole gamma ray logging system comprising a gamma ray detector as claimed in claim 1 or claim 2 and further comprising:

(e) a photomultiplier tube which is disposed within said housing and which responds to the photons given off by said crystal to produce electrical output pulses having magnitudes proportional to the energy of said detected gamma rays,

(f) means for moving said housing through a borehole, and

(g) a recording system for recording the output pulses from said photomultiplier tube as a function of the depth of said housing in said borehole.

## Patentansprüche

1. Gammastrahlendetektor für die Bohrlochvermessung aus

(a) einem vakuumisolierten Gehäuse,

(b) einem Wismuthgermanatkristall, welcher innerhalb des Gehäuses angeordnet ist und für Gammastrahlen empfindlich ist sowie Lichtenergie in Form von Photonen proportional zur Energie der erfaßten Gammastrahlen abgibt,

(c) einem innerhalb des Gehäuses angeordneten wärmeabsorbierenden Material zum Absorbieren von Wärme, welche durch eine Phasenänderung des wärmeabsorbierenden Materials vom festen in den flüssigen Zustand in das Innere des Gehäuses übertragen worden ist, und

(d) einer wärmeleitenden Auskleidung, die das wärmeabsorbierende Material un ihrer Stelle hält, wenn das wärmeabsorbierende Material von der festen in die flüssige Phase übergeht.

2. Gammastrahlendetektor nach Anspruch 1, worin das wärmeabsorbierende Material Gallium oder eine Legierung aus Gallium mit Zinn oder Indium ist.

3. Bohrlochvermessungsvorrichtung mit einem Gammastrahlendetektor nach Anspruch 1 oder 2, welcher zusätzlich

(e) eine Photoverstärkerröhre, welche innerhalb des genannten Gehäuses angeordnet ist und auf die von dem Kirstall abgegebenen Photonen anspricht, um elektrische Ausgangsimpulse in Größenordnungen proportional der Energie der erfaßten Gammastrahlen zu erzeugen,

(f) eine Vorrichtung zum Bewegen des Gehäuses durch ein Bohrloch, und

(g) eine Aufzeichnungsvorrichtung zum Aufzeichnen der von der Photoverstärkerröhre kommenden Ausgangsimpulse als Funktion der Tiefe des Gehäuses in dem Bohrloch.

## Revendications

1. Détecteur de rayons gamma pour diagraphie de sondage, comprenant:

(a) un logement isolant sous vide,

(b) un cristal de germanate de bismuth qui est placé à l'intérieur dudit logement et qui est sensible aux rayons gamma et émet une énergie lumineuse sous forme de photons proportionnelle à l'énergie des rayons gamma détectés,

(c) un matériau d'absorption de chaleur disposé à l'intérieur du logement afin d'absorber la chaleur transférée à l'intérieur du logement par le biais d'un changement de phase dudit matériau d'absorption de chaleur de l'état solide à l'état liquide, et

(d) un revêtement conducteur de la chaleur servant à maintenir en place ledit matériau d'absorption de chaleur lorsque ce dernier passe de la phase solide à la phase liquide.

2. Détecteur de rayons gamma selon la revendication 1, où ledit matériau d'absorption de chaleur est le gallium ou un alliage de gallium avec l'étain ou l'indium.

3. Système de diagraphie de sondage par rayons gamma, comprenant un détecteur de rayons gamma selon la revendication 1 ou 2 et comprenant en outre:

(e) un tube photomultiplicateur qui est disposé à l'intérieur dudit logement et qui répond aux photons émis par ledit cristal en produisant des impulsions de sortie électriques dont les amplitudes sont proportionnelles à l'énergie desdits rayons gamma détectés,

(f) un moyen servant à déplacer ledit logement dans un trou de sonde, et

(g) un système d'enregistrement servant à enregistrer les impulsions de sortie dudit tube photomultiplicateur en fonction de la profondeur ledit logement dans ledit trou de sonde.

FIG. 1

FIG. 3

FIG. 2

1